# EUROPÄISCHE PATENTSCHRIFT

(11) **EP 0 492 111 B1**
(45) Veröffentlichungstag und Bekanntmachung des Hinweises auf die Patenterteilung: **31.01.1996**
(21) Anmeldenummer: 91119237.5
(22) Anmeldetag: 12.11.1991
(51) Int. Cl.: G05D 7/01

(54) **Durchflussregler**
Flow controller
Régulateur d'écoulement

(30) Priorität: 21.12.1990 DE 4041116
(43) Veröffentlichungstag der Anmeldung: 01.07.1992
(73) Patentinhaber: DIETER WILDFANG GmbH, D-79379 Müllheim (DE)
(72) Erfinder: Nolte, Heinz, W-7844 Neuenburg 2 (DE)
(74) Vertreter: Schmitt, Hans, Dipl.-Ing.

(56) Entgegenhaltungen:
- EP-A- 0 036 405
- DE-A- 2 616 566
- DE-A- 2 707 750
- DE-A- 3 226 743
- DE-A- 3 723 559
- FR-A- 2 460 002

## Beschreibung

Die Erfindung bezieht sich auf einen Durchflußregler mit einem innerhalb eines Gehäuses angeordnetem, außenseitig profilierten Regelkern sowie einem ringförmig um den Regelkern herum angeordneten, elastomeren Steuerelement, welches sich in Durchströmrichtung auf einer Ringschulter abstützt.

Aus der DE-OS 20 60 751 ist bereits ein Durchfluß- oder Flüssigkeitsmengenregeler der eingangs erwähnten Art bekannt. Bei diesem Regler ist der Volumenstrom von auftretenden Maßtoleranzen der Einzelteile, insbesondere des Regelkernes und auch des Steuerelementes stark abhängig. Es ist deshalb ein Abgleichverfahren (DE-PS 33 02 759) für die Spritzgußform des profilierten Regelkernes vorgesehen, mit dem eine Anpassung an den Sollwert der jeweiligen Durchflußmenge vorgenommen werden kann. Damit können insbesondere unterschiedliche Materialeigenschaften und Maßtoleranzen des Steuerelementes ausgeglichen werden. Dieses Abgleichverfahren erfordert erhebliche Erfahrung und Fingerspitzengefühl und kann nur von Fachleuten durchgeführt werden, wobei die Form an ganz bestimmten Stellen mittels motorisch betriebener biegsamer Welle und Miniaturschleifstiften nach Erfahrungswerten und vorgegebenen Regeln abgeschliffen wird.

Die Herstellung und das Abgleichverfahren sind bei diesem Regler insgesamt sehr aufwendig und bei einer Serienproduktion mit großen Stückzahlen ist ein solcher Aufwand praktisch nicht vertretbar.

Hinzu kommt, daß der Regler in einer bestimmten Ausführungsform jeweils nur für eine bestimmte Durchflußklasse vorgesehen ist, wobei für Nenndurchflüsse im Bereich von 0,25 ltr/min und 50 ltr/min eine ganze Reihe verschiedener Regelkerne und auch verschiedener Steuerelemente eingesetzt werden müssen. Demgemäß ist dazu auch eine entsprechend große Zahl von Formenstätzen für die Herstellung erforderlich.

Aus der DE-A-26 16 566 ist ein Durchflußbegrenzer bekannt, der ein elastomeres, ringförmiges Steuerelement und einen zentralen Zapfen aufweist. Dieser Durchflußbegrenzer hat einen vergleichsweise schmalen Druck-Arbeitsbereich von z.B. 3 bar und läßt sich als Durchflußregler nicht einsetzen, da er als Durchflußbegrenzer zwar ab Erreichen eines bestimmten Druckes den Durchfluß begrenzt, diese Funktion aber nur in einem schmalen Arbeits-Druckbereich realisiert ist.

Ein Druckregler soll den Volumenstrom aber in einem weiten Druckbereich weitgehend konstant halten, beispielsweise in einem Druckbereich zwischen 0,5 bis 10 bar oder auch mehr. Auch die DE 38 40 331 zeigt einen Durchflußbegrenzer, der als Durchflußregler mit entsprechend großem Druck-Arbeitsbereich nicht einsetzbar ist. Die Ansprechempfindlichkeit ist hierbei zwar insbesondere durch die im Drosselkörper vorgesehene Stauausnehmungen schon verbessert, für den Einsatz als Durchflußregler ist der damit erzielbare Druck-Arbeitsbereich aber nicht ausreichend.

Bei den beiden vorgenannten Durchlußbegrenzern ist auch nachteilig, daß zum gleichmäßigen Verteilen des Durchströmmediums in Durchströmrichtung nach dem Steuerspalt ein zusätzlicher Lochkranz erforderlich ist, wodurch auch die Bauhöhe vergrößert ist.

Aufgabe der vorliegenden Erfindung ist es, aufwendige Abstimmarbeiten bei der Herstellung eines Reglers der eingangs erwähnten Art zu vermeiden und damit insbesondere auch eine Serienfertigung mit großen Stückzahlen zu ermöglichen, ohne daß dabei vorgegebene Toleranzgrenzen überschritten werden. Insbesondere soll die Konstruktion reproduzierbare Werte ergeben und die Herstellung soll einfach und kostengünstig sein, wobei mit einer möglichst geringen Anzahl von Formensätzen eine möglichst große Anzahl von Durchflußnennwerten abgedeckt werden können.

Die Lösung dieser Aufgabe ist im Kennzeichnungsteil des Anspruches 1 wiedergegeben. Bei dieser Ausführungsform des Steuerlements hat es sich in praktischen Versuchen gezeigt, daß der Regler damit sehr unempfindlich gegenüber maßlichen Toleranzen seiner Einzelteile ist, so daß auch bei einer Serienproduktion mit großen Stückzahlen und gegebenenfalls unterschiedlichen Chargen von Einzelteilen die vorgegebene Toleranzgrenzen bezüglich des jeweils vorgegebenen Durchflußnennwertes eingehalten werden können. Trotz dieser Unempfindlichkeit hinsichtlich auftretender Maßtoleranzen ist das Regelverhalten dieses Reglers in einem großen Druckbereich besonders gut, da durch die Gestaltung und Lage der Ringschulter eine schon auf geringe Druckdifferenzen reagierende Verformung des Steuerelements möglich ist.

Besonders vorteilhaft ist hierbei auch, daß man mit einer vergleichsweise geringen Anzahl unterschiedlicher Ausführungsvarianten, die aber das gleiche Grundprinzip beinhalten, auskommt. Insbesondere kann das Steuerlement für alle Ausführungsformen bezüglich seiner Außengeometrie gleich ausgebildet sein und und die Anpassung an unterschiedliche Druckbereiche wird beim Steuerelement alleine durch unterschiedliche Materialeingenschaften erzielt. Dementsprechend kann für das Steuerlement für alle Ausführungsvarianten des Reglers eine einzige Form verwendet werden, was eine erhebliche Aufwandreduzierung bedeutet. Durch die am Außenumfang des Regelkernes verteilt in Durchströmrichtung orientierten Steuernuten ist auch beim Regelkern eine Anpaßmöglichkeit an unterschiedliche Betriebsbedingungen gegeben. Diese Anpaßbarkeit besteht in einer festen Vorgabe, die dann für den vorgesehenen Arbeitsbereich paßt, ohne daß nach der Herstellung noch Anpaßarbeiten notwendig wären. Es hat sich herausgestellt, daß mit nur drei unterschiedlichen Gehäusekonfigurationen mit jeweils unterschiedlichem Regelkern und lediglich bezüglich der Materialeigenschaften angepaßten Steuerelementen der gesamte vorgesehene Durchflußklassen-Bereich abgedeckt werden kann.

Vorteilhaft ist es, wenn die im Regelkern vorgesehene Steuernuten im zuströmseitigen Einlaufbereich einen größeren Durchlaßquerschnitt als im Bereich des außenseitig durch die Flachseite des Ringkörpers begrenzten Durchtrittspalters haben, der in diesem Bereich eine Drosselstelle bildet.

Im Bereich der Steuernuten ist dadurch in Verbindung mit dem konischen Einlaufabschnitt des Steuerelementes eine beidseitig sich konisch verengende Strömungsführung gebildet, durch die das Steuerelement in den Bereichen der Steuernuten bei entsprechender Differenzdruckbeaufschlagung verstärkt etwa radial nach innen eingezogen wird.

Vorzugsweise laufen die Steuernuten zuströmseitig zusammen und weisen dort schneidenförmige Randbegrenzungen auf, wobei die zwischen den Eintrittsöffnungen der Nuten befindlichen, etwa in Zuströmrichtung weisenden Flachseiten des Regelkernes vorzugsweise als radial nach außen abfallende Dachschrägen ausgebildet sind. Dies ergibt eine strömungsgünstige, weitgehend wirbelfreie Strömungsführung und Zuleitung in den verengten Ringspaltbereich, so daß dementsprechend nur eine geringe Geräuschentwicklung und auch ein geringer Strömungswiderstand im Eintittsbereich vorhanden sind.

Für eine geringe Geräuschentwicklung trägt auch bei, wenn abströmseitig hinter der Ringschulter ein radial erweiteter Expansionsraum vorgesehen ist. Es findet in diesem Bereich eine Strömungsberuhigung und eine Geräuschminderung statt.

Zweckmäßigerweise ist der Regelkern abströmseitig hinter dem Steuerelement vorzugsweise mit Abstand zu diesem über Stege mit dem Außengehäuse verbunden. Somit sind im Zuströmbereich und auch beim Regelabschnitt selbst keine in die Strömung ragenden und diese in unerwünschter Weise verwirbelnde Teile vorhanden.

Für größere Durchflußmengen ist in dem Regelkern wenigstens ein Durchlaßkanal, vorzugsweise ein zentraler Durchlaßkanal vorgesehen.

Dieser Durchlaßkanal bildet einen ungeregelten Bypaß, so daß das Steuerelement zusammen mit dem Regel kern vom Grundkonzept wie bei kleineren Durchflußmengen ausgebildet sein kann, da im geregelten Durchlaufspalt nur ein Teil des Gesamtdurchflusses hindurchtritt.

Dies trägt somit dazu bei, daß auch bei größeren Durchflußmengen zumindest das Steuerelement unverändert bleiben kann.

Eine Ausgestaltung der Erfindung sieht vor, daß das ringförmige Steuerelement innerhalb seines auf der Ringschulter aufliegenden Bereiches in Funktionsstellung Stauöffnungen bildende, etwa in Durchströmrichtung orientierte Ausnehmungen aufweist. Durch diese Ausnehmungen weist das Steuerelement eine größere Nachgiebigkeit und Elastizität auf, durch die auch bereits bei geringeren Drücken Verformungen auftreten können, die den Durchfluß auf den vorgesehenen Sollwert einregulieren. Durch die größere Nachgiebigkeit und das größere Rückstellvermögen (Rückprallelastizität) ergibt sich auch ein wesentlich größerer Bewegungshub des Steuerelementes während des Betriebes, bei schwankenden oder konstanten Fließdrücken so daß auch der Durchlaufringraum zwischen dem Steuerelement und dem Regelkern größer ausgebildet werden kann. Dies wiederum ergibt eine geringere Störanfälligkeit gegen Verschmutzen und Verstopfen.

Nach einer Weiterbildung ist vorgesehen, daß die Anzahl der Ausnehmungen im Steuerelement und die Anzahl der Steuernuten im Regelkern ungleich sind, und daß insbesondere eine Anzahl vorzugsweise eine gerade und die andere Anzahl eine ungerade Zahl ist. Dadurch wird verhindert, daß bei einer bestimmten Lagezuordnung von Regelkern und Steuerelement in unerwünschter Weise ein "Zuschnüren" des Durchlasses bei hohen Drücken auftritt.

Eine bevorzugte Ausführungsform sieht vor, daß eine kleine Anzahl von Steuernuten im Regelkern vorgesehen ist, vorzugsweise drei Steuernuten und daß gegebenenfalls das Steuerelement vier oder mehr Ausnehmungen aufweist. Wenige Steuernuten lassen sich sehr gleichmäßig bezüglich ihrer Verteilung am Umfang und hinsichtlich gleicher Formen und Abmessungen herstellen. Außerdem hat dies einen günstigen Einfluß auf das Regelverhalten.

Eine vorteilhafte Weiterbildung der Erfindung sieht vor, daß die dem Steuerelement zugewandte Innenkante der Ringschulter abgeschrägt, insbesondere angefast und/oder abgerundet ist. Das etwas über diese Innenkante der Ringschulter überstehende Steuerelement kann dadurch bei Differenzdruckbeaufschlagung sich über diese Innenkante verformen, wobei schon bei geringerer Druckbeaufschlagung ein vergleichsweise großes radiales Einschnüren in diesen Bereich erzielt wird. Dadurch wird ein steiler Kennlinienanstieg im unteren Druckbereich begünstigt.

Zusätzliche Ausgestaltungen der Erfindung sind in den weiteren Unteransprüchen aufgeführt.

Nachstehend ist die Erfindung mit ihren wesentlichen Einzelheiten anhand der Zeichnungen noch näher erläutert.

Es zeigt:
- **Fig. 1**: Längsschnittdarstellung eines Durchflußreglers,
- **Fig. 2**: eine Aufsicht des in Figur 1 gezeigten Durchflußreglers auf dessen Zuströmseite,
- **Fig. 3**: eine Aufsicht eines Durchflußreglers gemäß Figur 2, hier jedoch mit verformten Steuerelement,
- **Fig. 4**: eine halbseitig im Schnitt dargestellte Seitenansicht eines Durchflußreglers mit abgerundeter Ringschulter-Innenkante,
- **Fig. 5**: eine etwa Fig. 4 entsprechende Darstellung, hier jedoch mit angefaster Ringschulter-Innenkante und verformten Steuerelement,
- **Fig. 6**: eine Längsschnittdarstellung eines Durchflußreglers mit in dessen Regelkern befindlichem Durchlaßkanal,
- **Fig. 7**: eine halbseitig im Schnitt gehaltene Seitenansicht eines abgewandelt ausgebildeten Durchflußreglers und
- **Fig. 8**: den in Figur 7 gezeigten Durchflußregler in zuströmseitiger Aufsicht.

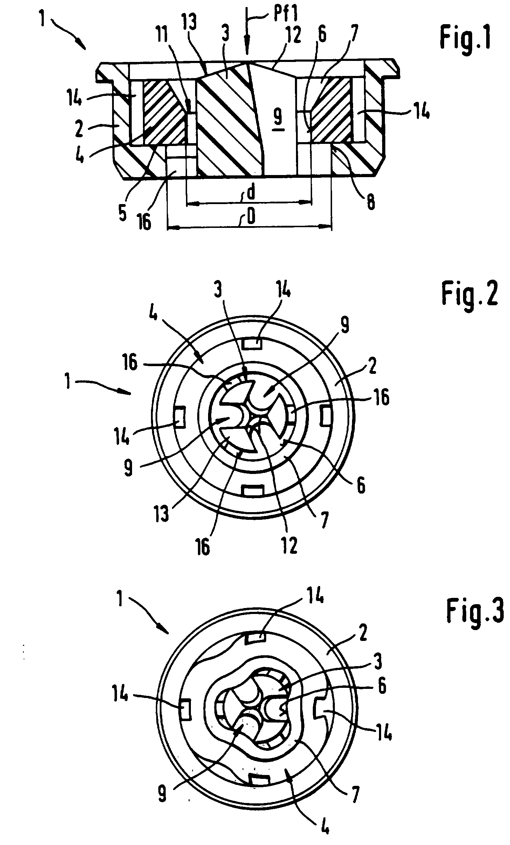

Ein beispielsweise in Figur 1 und 2 gezeigter Durchflußregler 1 kann insbesondere in Durchlauferhitzern, in Verbindung mit Magnetventilen, bei Sprinkleranlagen, Füllanlagen und dergleichen eingesetzt werden. Er hat die Aufgabe, einen Flüssigkeits-Volumenstrom innerhalb einer vorgegebenen Durchflußklasse, in bestimmten Toleranzgrenzen weitgehend unabhängig vom zuströmseitigen Leitungsdruck konstant zu halten.

Der Durchflußregler 1 weist einen innerhalb eines Gehäuses 2 angeordneten Regelkern 3 auf. Um diesen herum ist ein elastisches Steuerelement 4 angeordnet, das aus einem elastomeren Werkstoff besteht.

Abströmseitig liegt das Steuerelement 4 auf einer Ringschulter 5 des Gehäuses 2 auf. Die Zuströmrichtung ist durch den Pfeil Pfl in Figur 1 gekennzeichnet.

Das Steuerelement 4 ist als Ringkörper ausgebildet und weist innenseitig, dem Regelkern 3 zugewandt eine etwa achsparallel verlaufende Ringflachseite 6 auf, an die sich zuströmseitig ein konischer Einlaufabschnitt 7 anschließt. Der lichte Innendurchmesser d des unverformten Steuerelementes 4 (Fig. 1 und 2) ist kleiner als der Durchtrittsdurchmesser D im Bereich der Ringschulter 5, so daß das Steuerelement 4 radial innen über die Ringschulter-Innenkante 8 übersteht.

Der Regelkern weist als Außenseitenprofilierung in Durchströmrichtung orientierte Steuernuten 9 auf. Ihr Durchlaßquerschnitt beziehungsweise deren Querschnittsform sind auf die vorgesehene Durchflußmenge und auch auf das Regelverhalten des Steuerelementes 4 abgestimmt.

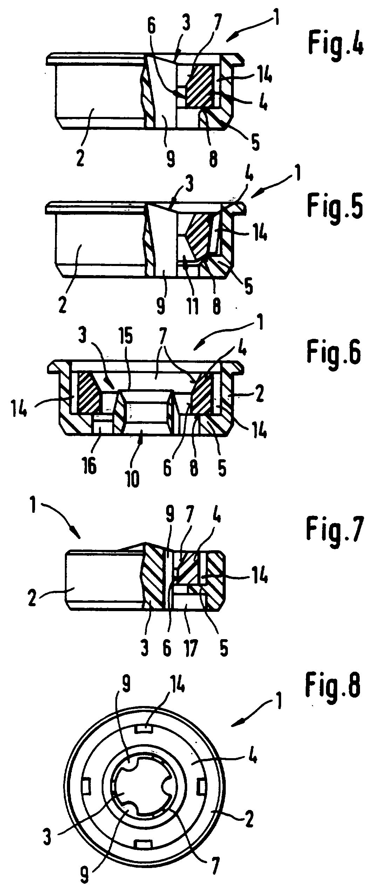

Je nach Ausführungsform unter anderem der Steuernuten 9 kann der Durchflußregler für Durchflußmengen zwischen o,5 bis 9 ltr/min eingesetzt werden. Dieser Bereich kann noch bis etwa 15 ltr/min Durchflußvolumenstrom erweitert werden, wenn sich in dem Regel kern 3 ein Durchlaßkanal 1o als ungeregelter Bypaß befindet, wie dies in Figur 6 gezeigt ist.

Im Ausführungsbeispiel gemäß Figur 1 bis 5 sind in dem Regelkern 3 am Umfang verteilt drei Steuernuten 9 vorgesehen, die im zuströmseitigen Einlaufbereich einen größeren Durchlaßquerschnitt als im Bereich des außenseitig durch die Ringflachseite 6 begrenzten Durchtrittsspaltes 11 haben. Durch diese Form der Steuernuten 9 laufen diese, wie gut in Figur 2 erkennbar, zuströmseitig zusammen und weisen dort schneidenförmige Randbegrenzungen 12 auf. Die etwa in Zuströmrichtung weisenden Flachseiten 13 des Regelkernes 3 neben den Steuernuten 9 sind als radial nach außen abfallende Dachschrägen ausgebildet. Insgesamt ist damit eine strömungsgünstige Formgebung des zuströmseitigen Regelkernbereiches vorhanden, durch die unerwünschte Verwirbelung der zuströmenden Flüssigkeit vermieden werden. Unter anderem trägt dies zu günstigen Regeleigenschaften und auch zu einer Geräuschreduzierung bei.

Der Regelabschnitt ist im wesentlichen durch den Durchtrittsspalt 11 im Bereich der Ringflachseite 6 gebildet. Diese weist eine vergleichsweise große axiale Erstreckung auf, die im Ausführungsbeispiel etwa bis zur Mitte der Gesamthöhe des Steuerelementes 4 geht. Die axiale Erstreckung der Ringflachseite 6 kann etwa ein Drittel bis ein Halb der Gesamthöhe des Steuerelementes 4 betragen. Man erreicht durch diesen vergleichsweise langen Regelabschnitt eine hohe Unempfindlichkeit gegenüber Maßtoleranzen sowohl des Steuerelementes 4 als auch des Regelkernes 3 mit seinen Steuernuten 9.

Solche Maßtoleranzen sind bei einer Serienfertigung mit hohen Stückzahlen unvermeidbar. Es muß jedoch trotzdem sichergestellt sein, daß die vorgegebenen Toleranzgrenzen bezüglich des jeweiligen Volumenstromes eingehalten werden. Durch die Konstruktion des Durchflußreglers 1 mit der speziellen Ausbildung des Steuerelementes 4 in Verbindung mit den vorgesehenen konstruktiven Maßnahmen beim Regelkern 3 und auch bei der Ringschulter 5 ist dies realisierbar.

Je nach den herrschenden Druckverhältnissen auf der Zuströmseite und auf der Abströmseite des Durchflußreglers stellt sich eine vom Differenzdruck abhängige Einschnürung des Steuerelementes 4 ein, wie dies in einer Arbeitsstellung in Figur 3 gezeigt ist. Je höher die Druckdifferenz ist, desto stärker wird sich das Steuerelement 4 einschnüren und damit den freien Durchlaßquerschnitt verringern. Die Ausbildung des Regelkernes 3 mit seinen Steuernuten 9 und die Ausbildung des Steuerelementes 4 sind so aufeinander abgestimmt, daß sich in einem vorgegebenen Druckbereich, der beispielsweise o,5 bis 12 bar betragen kann, ein weitgehend konstanter, vorgegebener Volumenstrom ergibt.

Die Ausbildung des Durchflußreglers 1 gemäß Figur 1 bis 5 läßt sich bei einem Volumenstrom von etwa 3 bis 9 ltr/min einsetzen. Innerhalb dieses Bereiches können verschiedene Durchflußklassen alleine durch Variation der Materialeigenschaften des Steuerelementes 4 realisiert werden. In vorteilhafter Weise können somit für die Einzelteile des Durchflußreglers gleiche Spritzgußformen verwendet, trotzdem aber Durchflußregler für unterschiedliche Durchflußklassen hergestellt werden.

Bevorzugt weist der Regelkern 3 nur wenige Steuernuten 9 auf, im Ausführungsbeispiel drei Steuernuten, die sich sehr präzise und gleichmäßig herstellen lassen. Dies trägt mit dazu bei, daß maßliche Toleranzen klein gehalten und somit der Volumenstrom ebenfalls in engen Toleranzgrenzen gehalten werden kann. Das Steuerelement 9 hat innerhalb seines auf der Ringschulter 5 aufliegenden Bereiches Ausnehmungen 14, die im Ausführungsbeispiel als radial nach außen hin randoffene Nuten ausgebildet sind. Da die abströmseitigen Enden der Ausnehmungen 14 durch die Ringschulter 5 begrenzt sind, bilden die Ausnehmungen 14 Stauöffnungen. Mit diesen Ausnehmungen läßt sich die elastische Nachgiebigkeit des Steuerelementes 4 beeinflussen. Bei einer großen Anzahl von Ausnehmungen erhält man dementsprechend eine besonders große elastische Nachgiebigkeit, was insbesondere bei Einsatz des Durchflußreglers bei niedrigen Drücken beziehungsweise auch geringem Volumenstrom vorgesehen ist. Die Eigenschaften des Steuerelementes 5 lassen sich so auch über einfach zu realisierende Formveränderungen, nämlich eine unterschiedliche Anzahl von Ausnehmungen 14 variieren. Erwähnt sei noch, daß auch der lichte Innendurchmesser d des Steuerelementes 4 auf einfache Weise angepaßt werden kann, indem bei der Spritzgußform in diesem Bereich unterschiedliche Einsatzringe verwendet werden. Der Durchtrittsspalt 11 kann somit an die vorgesehene Durchflußklasse angepaßt werden. Wie bereits vorerwähnt ist eine kleine Anzahl von Steuernuten 9 im Regel kern 3 vorgesehen, während die Ausnehmungen 14 im Steuerelement 4 bezüglich Anzahl und auch Formgebung auf die gewünschten elastischen Nachgiebigkeitseigenschaften des Steuerelementes 4 abgestimmt sind. Insbesondere ist vorgesehen, daß einerseits unterschiedliche Anzahlen von Steuernuten 9 und Ausnehmungen 14 vorgesehen sind, wobei insbesondere vermieden wird, daß sich eine symmetrische Zuordnung ergibt. Im Ausführungsbeispiel weist das Steuerelement außenrandseitig vier Ausnehmungen 14 und somit eine gerade Anzahl von Ausnehmungen auf, während eine ungerade Anzahl, nämlich drei Steuernuten 9 vorgesehen sind. Durch diese Unsymmetrie wird verhindert, daß bei hohen Druckdifferenzen ein "Abschnüren" erfolgt, bei dem der Durchlaßquerschnitt des Durchflußreglers praktisch vollständig verschlossen ist. Dies wird durch die unsymmetrische Anordnung beziehungsweise Zuordnung von Steuernuten 9 und Ausnehmungen 14 verhindert.

Auch die Querschnitts-Formgebung der Steuernuten 9 kann dem jeweiligen Arbeitsbereich angepaßt sein. Um das vorerwähnte "Abschnüren" bei hohen Drücken zu vermeiden, können die Steuernuten 9 auch eine hinterschnittene Querschnittsform haben, so daß ein vollständiges Ausfüllen des Steuernutenquerschnittes durch das einschnürende Steuerelement 4 praktisch ausgeschlossen ist. Auch bei eckigen Querschnittsformen wird dies schon weitgehend erreicht. Außer der dargestellten, halbrunden Querschnittsform (Figur 8) beziehungsweise der Nutenform mit Parallelseiten und gerundetem Nutengrund (zum Beispiel Figur 2) kann auch eine im Vergleich zu Figur 8 flachere Querschnittsform bei geringeren Drücken oder insbesondere bei größeren Drücken auch eine eckige Querschnittsform - rechteckig oder quadratisch mit unterschiedlicher Nutentiefe, dreieckig - oder aber hinterschnitten beispielsweise in Schwalbenschwanzform oder aber anstatt einer einzigen Nut eine aus mehreren Teilnuten nebeneinander bestehende Steuernut vorgesehen sein.

Der Regelkern 3 erstreckt sich bei den Ausführungsformen gemäß Figur 1 bis 5 und 7 bis 8 in axialer Richtung bis etwa in Höhe der Zustromseite des Steuerelementes. Je nach Durchflußmenge kann diese axiale Erstreckung des Regelkernes 3 auch verändert werden, wobei für höhere Durchflußraten ein in seiner axialen Erstreckung kürzerer Regelkern vorgesehen sein kann, wie dies beispielsweise in Figur 6 gezeigt ist.

Die dem Steuerelement 4 zugewandte Ringschulter-Innenkante 8 kann, wie in Figur 4 bis 6 erkennbar, unterschiedlich ausgebildet sein.

Figur 4 zeigt eine abgerundete Innenkante, Figur 5 eine angefaste Innenkante und Figur 6 eine praktisch scharfkantige Innenkante.

Diese Formgebung ermöglicht in Verbindung mit dem radial nach innen überstehenden Steuerelement 4 eine gezielte Beeinflussung des Regelverhaltens. Der vergleichsweise große Überstand mit gleichzeitiger Abrundung oder Anfasung der Innenkante 8 verbessert ein feinfühliges Ansprechen des Reglers schon bei geringen Druckdifferenzen. Wie in Figur 5 angedeutet verformt sich das Steuerelement 4 über die abgerundete oder angefaste Innenkante 8 zur Abströmseite hin, wobei das Maß dieser Verformung vom Differenzdruck abhängt. Mit zunehmender Druckdifferenz erfolgt eine größere unterseitige Abstützung des Steuerelementes 4, so daß hier automatisch eine Anpassung an die sich ändernden Druckverhältnisse erfolgt. Mit der Verformung über die Innenkante 8 erfolgt gleichzeitig auch ein etwa radiales Einschnüren und damit Verengen des Durchtrittsspaltes 11. Eine Anfasung oder Abrundung der Ringschulter-Innenkante 8 insbesondere auch mit einem vergleichsweise großen radialen überstandes des Steuerelementes 4 nach Innen ist insbesondere bei kleinen Durchflußmengen beziehungsweise auch geringen Drücken vorgesehen. Es kann durch diese Maßnahmen gezielt auch ein Übersteuern des Reglers im unteren Druckbereich erreicht werden. Dies ist beispielsweise dann vorteilhaft, wenn die Armatur selbst, in die der Durchflußregler 1 eingesetzt ist, eine Durchfluß-Druckkennlinie mit im niedrigen Druckbereich flach ansteigendem Volumenstrom aufweist.

Hat der Durchflußregler 1 im unteren Druckbereich dann eine über den Soll-Durchflußwert übersteuernde Kennlinie, so ergibt sich durch Überlagerung eine Kennlinie, die in erwünschter Weise bereits bei sehr niedrigen Drücken den Sollwert des Volumenstromes erreicht.

Diese Kennlinienbeeinflussung kann sowohl alleine durch das Maß des Überstandes des Steuerelementes 4 über die Innenkante 8 als auch in Kombination mit der Formgebung dieser Innenkante erreicht werden. Der in Figur 6 gezeigte Durchflußregler ist für größere Volumenströme von beispielsweise 8 bis 15 ltr/min vorgesehen. Hier ist auch erkennbar, daß dementsprechend die Ringschulter-Innenkante 8 scharfkantig ausgebildet ist und daß auch der radiale überstand des Steuerelementes 4 über diese Innenkante geringer ist als bei den Ausführungsvarianten gemäß Figur 4 und 5. Zusätzlich ist hier noch der im Regelkern 3 zentral angeordnete Durchlaßkanal 1o als ungeregelter Bypaß vorgesehen. Die Steuernuten 9 sind hier außen in dem hülsenförmigen Regelkern 3 etwa achsparallel verlaufend vorgesehen. Zuströmseitig und abströmseitig innen sind Übergangsschrägen vorgesehen, wobei diese zuströmseitig zu einer schneidenförmigen und damit strömungsgünstigen Einlaufkante 15 zusammengeführt sind.

Der sich an die Ringflachseite 6 zuströmseitig anschließende Einlaufabschnitt 7 des Steuerelementes 4 bildet eine strömungsgünstige Zuführung zu dem Durchtrittsspalt 11. Der Konuswinkel kann etwa 25° bis 35°, vorzugsweise 30° betragen. Der zentrale Regelkern 3 ist abströmseitig hinter dem Steuerelement 4 vorzugsweise mit Abstand zu diesem über Stege 16 mit dem Gehäuse 2 verbunden. Figur 2 läßt erkennen, daß diese Stege 16 jeweils in den Zwischenbereichen zwischen benachbarten Steuernuten 9 des Regelkernes 3 angeordnet sind. Da sie sich abströmseitig hinter dem Regelabschnitt befinden, haben sie keinen störenden Einfluß auf das Regelverhalten. Gegebenenfalls könnten diese Stege 16 zuströmseitig strömungsgünstig geformt sein, beispielsweise durch Dachschrägen oder Dachradien.

Figur 7 und 8 zeigen noch einen Durchflußregler 1, der für kleine Durchflußmengen, beispielsweise im Bereich von 0,5 bis 3,5 ltr/min einsetzbar ist. Bei diesem Ausführungsbeispiel sind im Regelkern 3 etwa achsparallele Steuernuten 9 vorgesehen. Diese Ausführungform zeigt auch noch abströmseitig hinter der Ringschulter 5 einen radial erweiterten Expansionsraum 17, durch den eine Strömungsberuhigung und Geräuschminderung erzielt werden kann. Ein solcher Expansionsraum 17 kann auch bei den Ausführungsbeispielen gemäß Figur 1 bis 6 vorgesehen sein.

Alle in der Beschreibung, den Ansprüchen und der Zeichnung dargestellten Merkmale können sowohl einzeln als auch in beliebiger Kombination miteinander erfindungswesentlich sein.

## Patentansprüche

1. Durchflußregler mit einem innerhalb eines Gehäuses (2) angeordneten Regelkern (3) sowie einem ringförmig um den Regelkern herum angeordnetem, elastomeren Steuerelement (4), welches sich in Durchströmrichtung auf einer Ringschulter abstützt, und innerhalb seines auf der Ringschulter aufliegenden Ringbereiches in Durchströmrichtung orientierte Stauöffnungen aufweist, wobei das Steuerelement (4) als Ringkörper mit einer dem Regelkern (3) zugewandten, achsparallel verlaufenden Ringflachseite (6) sowie einem sich entgegen der Strömungsrichtung an die Ringflachseite anschließenden konischen Einlaufabschnitt (7) ausgebildet ist, **dadurch gekennzeichnet**, daß der lichte Innendurchmesser (d) des unverformten Steuerelementes (4) kleiner ist als der Durchtrittsdurchmesser (D) im Bereich der Ringschulter (5), und daß eine Anzahl von am Außenumfang des Regelkernes (3) verteilten und in Durchströmrichtung orientierten Steuernuten (9) vorgesehen sind.

2. Durchflußregler nach Anspruch 1, dadurch gekennzeichnet, daß sich die Ringflachseite (6) des Steuerelementes (4) etwa über ein Drittel bis ein Halb der axialen Höhe des Steuerelementes (4) erstreckt und etwa gleich lang ist, wie die axiale Länge des Einlaufabschnittes (7).

3. Durchflußregler nach Anspruch 1 oder 2, dadurch gekennzeichnet, daß die am Außenumfang des Regelkernes (3) vorgesehenen Steuernuten (9) mit ihrem Durchlaßquerschnitt und/oder der Querschnittsform auf die vorgesehene Durchflußmenge und/oder das Regelverhalten des Steuerelementes (4) abgestimmt sind.

4. Durchflußregler nach einem der Ansprüche 1 bis 3, dadurch gekennzeichnet, daß die im Regelkern (3) vorgesehenen Steuernuten (9) im zuströmseitigen Einlaufbereich einen größeren Durchlaßquerschnitt als im Bereich des außenseitig durch die Ringflachseite (6) des Steuerelementes begrenzten Durchtrittsspaltes haben, der in diesem Bereich eine Drosselstelle bildet.

5. Durchflußregler nach einem der Ansprüche 1 bis 4, dadurch gekennzeichnet, daß die Steuernuten (9) zuströmseitig zusammenlaufen und dort schneidenförmige Randbegrenzungen (12) aufweisen und daß die zwischen den Eintrittsöffnungen der Steuernuten (9) befindlichen, etwa in Zuströmrichtung weisenden Flachseiten (13) des Regelkernes (3) als radial nach außen abfallende Dachschrägen ausgebildet sind.

6. Durchflußregler nach einem der Ansprüche 1 bis 5, dadurch gekennzeichnet, daß der Regelkern (3) abströmseitig hinter dem Steuerelement (4) mit Abstand zu diesem über Stege (16) mit dem Außengehäuse (2) verbunden ist.

7. Durchflußregler nach einem der Ansprüche 1 bis 6, dadurch gekennzeichnet, daß in dem Regelkern (3) wenigstens ein Durchlaßkanal (1o), vorzugsweise ein zentraler Durchlaßkanal vorgesehen ist.

8. Durchflußregler nach einem der Ansprüche 1 bis 7, dadurch gekennzeichnet, daß die Steuernuten (9) in dem Regelkern (3) etwa achsparallel verlaufen und daß bei einem hülsenförmigen, mit einem Durchlaßkanal (lo) versehenen Regelkern zu- oder abströmseitig innen- und/oder außenseitig Übergangsschrägen zuströmseitig gegebenenfalls zu einer schneidenförmigen Einlaufkante (15) zusammenlaufend vorgesehen sind.

9. Durchflußregler nach einem der Ansprüche 1 bis 8, dadurch gekennzeichnet, daß die Anzahl der Ausnehmungen (14) im Steuerelement (4) und die Anzahl der Steuernuten (9) im Regelkern (3) ungleich sind und daß eine Anzahl, vorzugsweise eine gerade und die andere Anzahl eine ungerade Zahl ist.

10. Durchflußregler nach einem der Ansprüche 1 bis 9, dadurch gekennzeichnet, daß drei Steuernuten (9) im Regelkern gleichmäßig am Umfang verteilt vorgesehen sind und daß das Steuerelement (4) vier oder mehr Ausnehmungen (14) aufweist.

11. Durchflußregler nach einem der Ansprüche 1 bis 10, dadurch gekennzeichnet, daß die Steuernuten (9) im Regelkern (3) beziehungsweise die gegebenenfalls vorgesehenen Ausnehmungen (14) im Steuerelement (4) jeweils unterschiedliche Querschnittsformen aufweisen, zum Beispiel rund, eckig, linsenförmig, hinterschnitten oder dergleichen ausgebildet sind.

12. Durchflußregler nach einem der Ansprüche 1 bis 11, dadurch gekennzeichnet, daß der konische Einlaufabschnitt (7) des Steuerelementes (4) einen Konuswinkel von etwa 25° bis 35°, vorzugsweise etwa 30° aufweist.

13. Durchflußregler nach einem der Ansprüche 1 bis 12, dadurch gekennzeichnet, daß die dem Steuerelement (4) zugewandte Innenkante (8) der Ringschulter (5) abgeschrägt, insbesondere angefast und/oder abgerundet ist.

14. Durchflußregler nach einem der Ansprüche 1 bis 13, dadurch gekennzeichnet, daß sich der Regelkern (3) in axialer Richtung zumindest über die axiale Länge der inneren Ringflachseite des Steuerelementes (4) erstreckt und gegebenenfalls mit seiner Zuströmseite bis etwa in Höhe der Zuströmseite des Steuerelementes (4) ragt.

15. Durchflußregler nach einem der Ansprüche 1 bis 14, dadurch gekennzeichnet, daß abströmseitig hinter der Ringschulter (5) ein radial erweiterter Expansionsraum (17) vorgesehen ist.

## Claims

1. A flow controller having a regulating core (3) arranged within a housing (2), as well as an elastomeric control element (4) which is arranged ringlike around the regulating core, is supported in the direction of flow on an annular shoulder and has within its area bearing on the annular shoulder retaining openings oriented in the direction of flow, wherein the control element (4) takes the form of an annular body having an annular face (6) which confronts the regulating core (3) and runs axially parallel, as well as a conical intake portion (7) adjoining the annular face counter to the direction of flow, **characterized in that** the inside diameter (d) of the undeformed control element (4) is smaller than the diameter (D) of passage in the region of the annular shoulder (5), and that distributed on the outer circumference of the regulating core (3) there is a number of control grooves (9) provided oriented in the direction of flow.

2. A flow controller as claimed in claim 1, characterized in that the annular face (6) of the control element (4) extends approximately over one third to one half the axial height of the control element (4) and is approximately the same length as the axial length of the intake portion (7).

3. A flow controller as claimed in claim 1 or claim 2, characterized in that the section of passage and/or cross-sectional shape of the control grooves (9) provided on the outer circumference of the regulating core (3) is/are adapted to the designated flow rate and/or regulating action of the control element (4).

4. A flow controller as claimed in any one of claims 1 to 3, characterized in that the control grooves (9) provided in the regulating core (3) have a larger section of passage in the intake area on the inflow side than in the area of the gap for passage externally defined by the annular face (6) of the control element, in the latter area said gap composing a restrictor.

5. A flow controller as claimed in any one of claims 1 to 4, characterized in that the control grooves (9) converge on the inflow side and there have knife-shape boundaries (12) and that the faces (13) of the regulating core (3) which are situated between the intake orifices of the control grooves (9) and point approximately in the direction of inflow take the form of roof slopes slanting radially outwardly.

6. A flow controller as claimed in any one of claims 1 to 5, characterized in that the regulating core (3) is connected to the outer housing (2) via webs (16), said connection being established after and in spaced relationship to the control element (4) in the direction of outflow.

7. A flow controller as claimed in any one of claims 1 to 6, characterized in that at least one channel (10), preferably a central channel, is provided in the regulating core (3).

8. A flow controller as claimed in any one of claims 1 to 7, characterized in that the control grooves (9) in the regulating core (3) run approximately axially parallel and that in the case of a sleeve-like regulating core having a channel (10) there are transition slopes provided on the inflow or outflow side, internally and/or externally, which on the inflow side may converge to form a knife-shaped intake edge (15).

9. A flow controller as claimed in any one of claims 1 to 8, characterized in that the number of recesses (14) in the control element (4) and the number of control grooves (9) in the regulating core (3) are unequal and that one number is preferably even and the other uneven.

10. A flow controller as claimed in any one of claims 1 to 9, characterized in that three control grooves (9) evenly distributed at the circumference are provided in the regulating core and that the control element (4) has four or more recesses (14).

11. A flow controller as claimed in any one of claims 1 to 10, characterized in that the control grooves (9) in the regulating core (3) and/or the recesses (14) possibly provided in the control element (4) in each case have different cross-sectional shapes, being of e.g. round, angular, lenticular, undercut configuration or the like.

12. A flow controller as claimed in any one of claims 1 to 11, characterized in that the conical intake portion (7) of the control element (4) has a cone angle of about 25° to 35°, preferably about 30°.

13. A flow controller as claimed in any one of claims 1 to 12, characterized in that the inner edge (8) belonging to the annular shoulder (5) and facing the control element (4) is bevelled, particularly chamfered and/or rounded.

14. A flow controller as claimed in any one of claims 1 to 13, characterized in that the regulating core (3) extends in the axial direction at least over the axial length of the inner annular face of the control element (4) and the inflow side of said regulating core may project to about the level of the inflow side of the control element (4).

15. A flow controller as claimed in any one of claims 1 to 14, characterized in that a radially enlarged expansion space (17) is provided after the annular shoulder (5) in the direction of outflow.

## Revendications

1. Régulateur d'écoulement comprenant un noyau de régulation (3) disposé dans un boîtier (2), ainsi qu'un élément de commande élastomère annulaire (4) disposé autour du noyau de régulation, qui prend appui sur un épaulement annulaire dans le sens de l'écoulement et qui présente à l'intérieur de sa zone annulaire reposant sur l'épaulement annulaire des ouvertures de retenue orientées dans le sens d'écoulement, sachant que l'élément de commande (4) est réalisé sous la forme d'un corps annulaire muni d'une face plate annulaire (6) tournée vers le noyau de régulation (3) et s'étendant parallèlement à l'axe, ainsi que d'un segment d'entrée conique (7) faisant suite à la face plate annulaire dans le sens opposé au sens d'écoulement, caractérisé en ce que le diamètre intérieur (d) de l'élément de commande non déformé (4) est inférieur au diamètre de passage (D) dans la zone de l'épaulement annulaire (5), et en ce qu'est prévu un certain nombre de rainures de commande (9) réparties sur le pourtour extérieur du noyau de régulation (3) et orientées dans le sens d'écoulement.

2. Régulateur d'écoulement selon la revendication 1, caractérisé en ce que la face plate annulaire (6) de l'élément de commande (4) s'étend approximativement sur une distance comprise entre un tiers et une moitié de la hauteur axiale de l'élément de commande (4) et est approximativement aussi longue que la longueur axiale du segment d'entrée (7).

3. Régulateur d'écoulement selon la revendication 1 ou 2, caractérisé en ce que la section de passage et/ou la forme de section transversale des rainures de commande (9) prévues sur le pourtour extérieur du noyau de régulation (3) est (sont) coordonnée(s) avec le débit prévu et/ou avec le comportement régulateur de l'élément de commande (4).

4. Régulateur d'écoulement selon l'une des revendications 1 à 3, caractérisé en ce que les rainures de commande (9) prévues dans le noyau de régulation (3) ont une section de passage plus grande dans la zone d'affluence que dans la zone de la fente de passage délimitée à l'extérieur par la face plate annulaire (6) de l'élément de commande, fente de passage qui forme dans cette zone un point d'étranglement.

5. Régulateur d'écoulement selon l'une des revendications 1 à 4, caractérisé en ce que les rainures de commande (9) convergent du côté de l'affluence et présentent à cet endroit des limites périphériques en forme de taillant (12), et en ce que les côtés plats (13) du noyau de régulation (3) qui se trouvent entre les ouvertures d'entrée des rainures de commande (9) et qui pointent approximativement dans le sens d'affluence sont réalisés en tant que pentes descendant radialement vers l'extérieur.

6. Régulateur d'écoulement selon l'une des revendications 1 à 5, caractérisé en ce que le noyau de régulation (3) est relié au boîtier extérieur (2) du côté de la sortie, derrière l'élément de commande (4) et à distance de ce dernier, par le biais de pattes (16).

7. Régulateur d'écoulement selon l'une des revendications 1 à 6, caractérisé en ce qu'au moins un canal de passage (10), de préférence un canal de passage central, est prévu dans le noyau de régulation (3).

8. Régulateur d'écoulement selon l'une des revendications 1 à 7, caractérisé en ce que les rainures de commande (9) dans le noyau de régulation (3) s'étendent approximativement parallèlement à l'axe, et en ce qu'en présence d'un noyau de régulation en forme de douille et muni d'un canal de passage (10), sont prévues, du côté de l'affluence ou de la sortie, sur l'intérieur et/ou sur l'extérieur, des pentes de transition convergeant du côté de l'affluence, le cas échéant vers une arête d'entrée en forme de taillant (15).

9. Régulateur d'écoulement selon l'une des revendications 1 à 8, caractérisé en ce que le nombre d'évidements (14) dans l'élément de commande (4) est différent du nombre de rainures de commande (9) dans le noyau de régulation (3), et en ce qu'un nombre est, de préférence, un nombre pair et l'autre nombre un nombre impair.

10. Régulateur d'écoulement selon l'une des revendications 1 à 9, caractérisé en ce que sont prévues trois rainures de commande (9) qui sont uniformément réparties sur le pourtour du noyau de régulation, et en ce que l'élément de commande (4) présente quatre évidements (14) ou davantage.

11. Régulateur d'écoulement selon l'une des revendications 1 à 10, caractérisé en ce que les rainures de commande (9) dans le noyau de régulation (3) et les évidements (14) qui sont éventuellement prévus dans l'élément de commande (4) présentent respectivement des sections transversales de forme différente et sont réalisés, par exemple, avec une forme ronde, polygonale, lenticulaire, contre-dépouillée ou analogues.

12. Régulateur d'écoulement selon l'une des revendications 1 à 11, caractérisé en ce que le segment d'entrée conique (7) de l'élément de commande (4) présente un angle d'entrée compris environ entre 25° et 35°, de préférence de 30°.

13. Régulateur d'écoulement selon l'une des revendications 1 à 12, caractérisé en ce que l'arête intérieure (8) de l'épaulement annulaire (5) tournée vers l'élément de commande (4) est inclinée, notamment biseautée et/ou arrondie.

14. Régulateur d'écoulement selon l'une des revendications 1 à 13, caractérisé en ce que le noyau de régulation (3) s'étend dans la direction de l'axe au moins sur la longueur axiale de la face plate annulaire intérieure de l'élément de commande (4) et s'étend, le cas échéant, avec son côté d'affluence, environ jusqu'au niveau du côté d'affluence de l'élément de commande (4).

15. Régulateur d'écoulement selon l'une des revendications 1 à 14, caractérisé en ce qu'un espace d'expansion (17) élargi dans la direction radiale s'étend au niveau de la sortie, derrière l'épaulement annulaire (5).
